(19) Europäisches Patentamt
European Patent Office
Office européen des brevets

(11) Publication number: 0 444 867 A2

(12) # EUROPEAN PATENT APPLICATION

(21) Application number: 91301524.4

(22) Date of filing: 26.02.91

(51) Int. Cl.[5]: B29C 67/14, C08J 5/04, B29B 9/14, // B29K67:00, B29K63:00

(30) Priority: 02.03.90 JP 51427/90

(43) Date of publication of application: 04.09.91 Bulletin 91/36

(84) Designated Contracting States: AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka 541 (JP)

(72) Inventor: Murakami, Haruji
885-11, Miyahima
Fuji-shi, Shizuoka (JP)
Inventor: Hiragohri, Motohito
3-24, Sengen-Honcho
Fuji-shi, Shizuoka (JP)

(74) Representative: Taylor, Phillip Kenneth et al
W.P. THOMPSON & CO. Coopers Building
Church Street
Liverpool L1 3AB (GB)

(54) **Process for preparing long fiber-reinforced thermoplastic polyester resin and molded article made therefrom.**

(57) A long fiber-reinforced thermoplastic polyester has the fiber impregnated well with the polyester and is produced by impregnating a molten thermoplastic polyester resin into a continuous reinforcing fiber bundle while pulling said fiber bundle to prepare a long fiber-reinforced polyester resin containing 5 to 80 % by weight, based on the whole, of reinforcing fibers arranged substantially in parallel to each other, characterized in that 0.05 to 10 parts by weight of an epoxy compound is used in combination with 100 parts by weight of the thermoplastic polyester resin and that either the epoxy compound is adhered to the reinforcing fiber bundle before being impregnated with the molten thermoplastic polyester resin, or the reinforcing fiber bundle is impregnated with a molten resin comprising a blend of the thermoplastic polyester resin with the epoxy compound.

EP 0 444 867 A2

Fig. 1

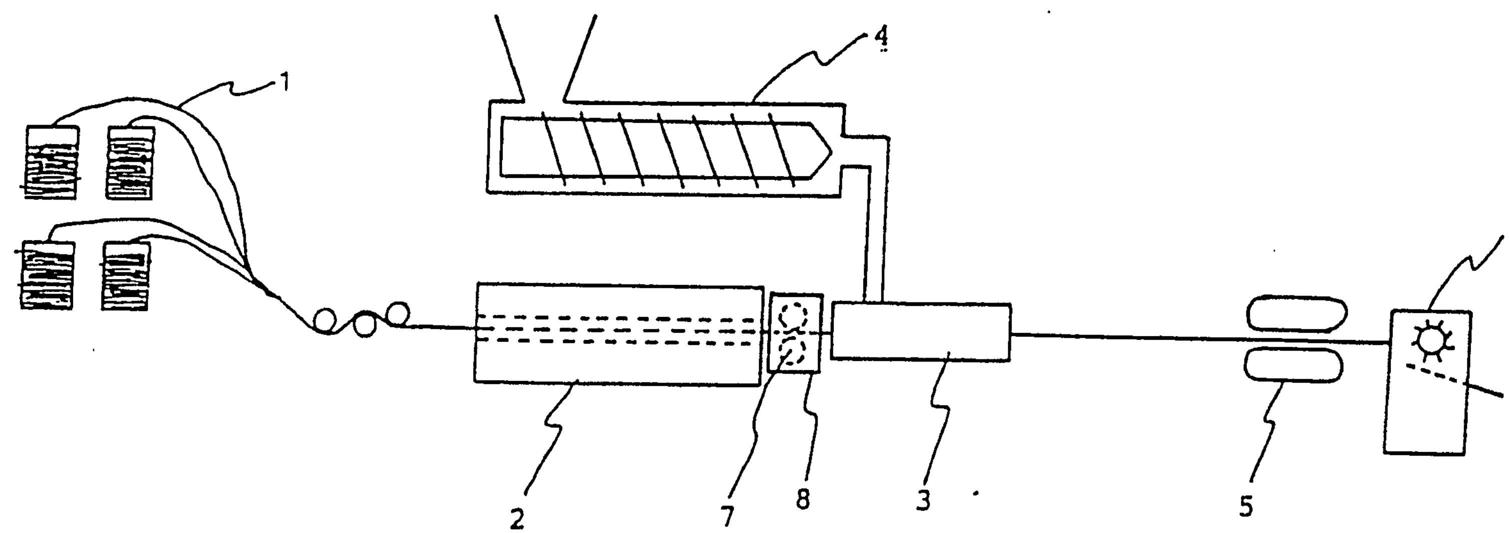

# PROCESS FOR PREPARING LONG FIBER-REINFORCED THERMOPLASTIC POLYESTER RESIN AND MOLDED ARTICLE MADE THEREFROM

The present invention relates to a process for preparing a thermoplastic polyester resin reinforced with a long fiber and having remarkably improved mechanical strengths and other properties.

[Prior Art]

The blending of a thermoplastic polyester resin such as polyethylene terephthalate or polybutylene terephthalate with a reinforcing fiber such as a glass fiber is known as a means for improving the strength, rigidity and other properties of the resin. In general, a fiber-reinforced thermoplastic polyester resin has been prepared by mixing a thermoplastic polyester resin with a short fiber such as chopped strand and extruding the mixture by means of an extruder. In the above-described short fiber-reinforced resin, the fiber used is short and inevitably broken during kneading in the extruder, so that the mechanical strengths or the like are improved only to a limited extent, which makes it impossible to meet the requirement for higher mechanical strengths or the like.

On the other hand, in recent years, pultrusion has drawn attention as a method for alleviating the above-described drawback to thereby prepare a long fiber-reinforced thermoplastic resin without causing the breakage of the fiber. This method basically comprises impregnating a resin into a continuous reinforcing fiber bundle while pulling the bundle and has widely been utilized as a method of reinforcing a thermosetting resin with a fiber. Various studies have been made to apply this method to the reinforcement of a thermoplastic resin with a fiber. For example, U.S. Patent No. 2877501 discloses a method wherein a continuous fiber is passed through a vessel containing an emulsion or a solution of thermoplastic resin while pulling the continuous fiber and the fiber is then heated to remove a solvent and melt the resin, thereby impregnating the resin into the fiber, and U.S. Patent No. 4439387 discloses a method wherein a molten resin is impregnated into a continuous fiber while pulling the fiber though a crosshead, while U.S. Patent No. 3022210 and Japanese Patent Laid-Open No 181852/1982 disclose a method wherein a thermoplastic resin melt having a low molecular weight and a low viscosity is impregnated into a continuous fiber while pulling the fiber.

For the purpose of the fiber reinforcement of a thermoplastic polyester resin as one of the thermoplastic resins, however, mere utilization of the above-described pultrusion cannot always result in a good impregnation of the resin into the fiber bundle and the adhesion of the resin to the fiber bundle, so that no expected improvement in the mechanical strengths, etc. can be attained. The insufficiency in the impregnation of the resin into the fiber bundle and in the adhesion of the resin to the fiber bundle causes various disadvantages such that the fibers readily come out of the reinforced resin and scatter, thus worsening the working environment and impairing the moldability of the resin and the appearance and properties of the molded article.

Since the reinforcement of a thermoplastic polyester resin with a fiber by pultrusion had the above-described problems, the solution of the problems has been eagerly desired in the art.

( Summary of the invention )

The present inventors have made intensive studies with a view to solving the above-described problems of the long fiber-reinforced polyester resin and the process for preparing the same to thereby develop a long fiber-reinforced polyester resin excellent in the impregnation of the resin into the long fiber bundle and in the adhesion between the resin and the fiber and having remarkably improved mechanical strengths, etc. and, as a result, have found that in the production of a long fiber-reinforced polyester resin by pultrusion wherein an improvement in the adhesion between the fiber and the resin cannot be expected at all because, as opposed to the mixing of a short fiber, any shearing force caused by kneading cannot be applied to the reinforcing fiber and the resin, the use of a thermoplastic polyester resin in combination with an epoxy compound is particularly effective in solving the above-described problems at once, which has led to the completion of the present invention.

Accordingly, the present invention relates to a process for preparing a long fiber-reinforced thermoplastic polyester resin comprising a reinforcing fiber bundle and a polyester resin sufficiently impregnated into and bonded to said fiber bundle, which comprises impregnating a molten thermoplastic polyester resin into a continuous reinforcing fiber bundle while pulling the fiber bundle to prepare a long fiber-reinforced polyester resin containing 5 to 80 % by weight, based on the whole, of reinforcing fibers arranged substantially in parallel to each other, characterized in that 0.05 to 10 parts by weight of an epoxy compound is used in combination with 100 parts by weight of the thermoplastic polyester resin and that either the epoxy resin is adhered to the reinforcing fiber

bundle before being impregnated with the molten thermoplastic polyester resin, or the reinforcing fiber bundle is impregnated with a molten resin comprising a blend of the thermoplastic polyester resin with the epoxy compound, and a molded article made of the reinforced resin prepared by said process.

The thermoplastic polyester resin composite, reinforced with long fiber, is prepared according to the invention by impregnating a bundle of the long fiber with a polyester composition comprising 100 parts by weight of the thermoplastic polyester and 0.05 to 10 parts by weight of the epoxy compound when pulling the bundle. An alternative way is to treating the bundle with the epoxy compound and then impregnating with the molten polyester and at the same time pulling the treated bundle.

( Brief description of drawing )

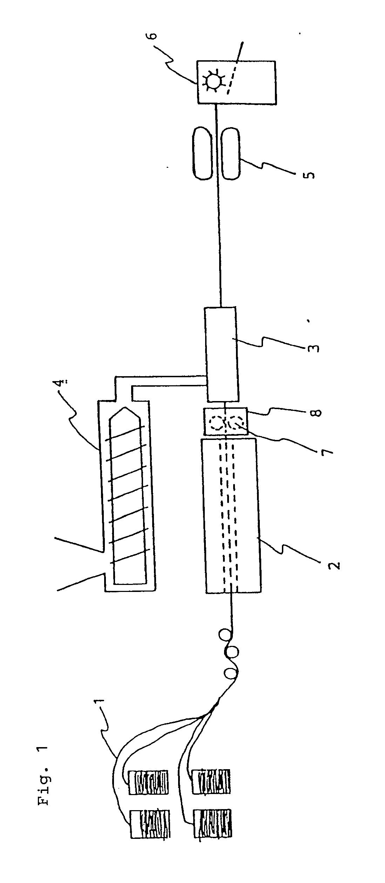

Fig. 1 is a schematic view (typical view) of one example of an apparatus (and a process) suitable for preparing the long fiber-reinforced thermoplastic polyester resin of the present invention.

1 ... continuous fiber,
2 ... heating device,
3 ... crosshead (die),
4 ... extruder,
5 ... take-up roll,
6 ... pelletizer,
7 ... heating roll,
8 ... heat insulating cover

In the present invention, the long fiber-reinforced polyester resin is prepared by pultrusion. The pultrusion basically comprises impregnating a resin into a continuous reinforcing fiber bundle while pulling the fiber bundle. Examples of the pultrusion method include a method which comprises passing a fiber through an impregnating bath containing an emulsion, a suspension or a solution of a resin to impregnate the resin into the fiber; a method which comprises spraying a resin powder on a fiber or passing a fiber through a vessel containing a resin powder to adhere a resin powder to the resin and melting the resin, thereby impregnating the resin into the fiber; and a method which comprises supplying a molten resin through an extruder or the like to a crosshead while passing a fiber through the crosshead. In the present invention, any of the above-described methods may be utilized. The method wherein use is made of a crosshead is particularly preferred, and this method is conducted by making use of an apparatus and procedure, e.g., as shown in Fig. 1.

The process for preparing the long fiber-reinforced polyester resin composition according to the present invention will now be described in more detail by referring to the pultrusion method shown in Fig. 1 wherein use is made of a crosshead. It is a matter of course that the present invention is not limited to only the apparatus and procedures exemplified herein.

In preparing a long fiber-reinforced polyester resin is prepared in the present invention, a continuous reinforcing fiber bundle 1 is first prepared. There is no particular limitation on the kind of the reinforcing fiber, and examples thereof include any of high-melting (high softening point) fibers such as glass fibers, carbon fibers, metal fibers and aromatic polyamide fibers. The form of the reinforcing fiber may be any of continuous fibers such as roving, yarn and filament. Roving is particularly preferred from the viewpoint of handleability. Woven fabrics as well may be used depending upon the purpose of use of the product. In the present invention, the above-described fiber may be used in a combination of two or more of them. It is preferred that the reinforcing fiber bundle be opened by means of a tension roll or the like before the impregnation step. Further, prior to the impregnation of the resin, for example, it is preferred to provide a heating device 2 or the like as shown in Fig. 1 for preheating the reinforcing fiber to a high temperature and bringing the reinforcing fiber kept at a high temperature into contact with the resin.

In the present invention, the amount of blending of the reinforcing fiber is 5 to 80 % by weight based on the whole resin. When the amount of blending is less than 5 % by weight, the reinforcing effect attained by the fiber is small. On the other hand, when it exceeds 80 % by weight, the processability in the preparation of the material or molding becomes remarkably poor and no significant improvement in the strengths, etc., by the increase in the amount of the fiber can be expected. When the balance between the reinforcing effect and the processability is taken into consideration, the amount of blending of the fiber is preferably 20 to 70 % by weight, particularly preferably 30 to 65 % by weight based on the total weight of the fiber-reinforced resin.

Then, the reinforcing fiber is impregnated with a thermoplastic resin. In this connection, the characteristic feature of the present invention resides in that an epoxy compound is used in combination with the thermoplastic polyester resin, and either the epoxy compound is adhered to the reinforcing fiber bundle before being impregnated with the thermoplastic polyester resin, or the reinforcing fiber bundle is impregnated with a molten mixture comprising a blend of the thermoplastic polyester resin with the epoxy compound. The epoxy compound

may be previously adhered to the reinforcing fiber by any of a method wherein an epoxy compound is used as a binder or surface treatment for a reinforcing fiber, and a method wherein an epoxy compound is adhered to a reinforcing fiber not containing an adherent epoxy compound while pulling the reinforcing fiber before being impregnated with the thermoplastic polyester resin. Further, when Fig. 1 is taken as an example, the mixture of a thermoplastic polyester resin with an epoxy compound may be impregnated into a reinforcing fiber by any of a method wherein an epoxy compound is mixed with a thermoplastic polyester resin and supplied to an extruder 4, a method wherein an epoxy resin is supplied to the middle part of an extruder, and a method wherein an epoxy compound is directly supplied to a cross-head 3. In the present invention, it is a matter of course that a reinforcing fiber containing an adherent epoxy compound is used for impregnation with a mixture of a thermoplastic polyester resin with an epoxy compound.

In the preparation of a long fiber-reinforced polyester resin according to the pultrusion of the present invention, the addition of the epoxy compound exhibits a very unique effect. As opposed to a short fiber-reinforced resin composition wherein a fiber is brought into sufficient contact and wetted with a resin through the utilization of a high shearing force caused by melt kneading, no sufficient shearing force can be applied to the resin and the fiber by kneading in the long fiber-reinforced resin because of the nature of the process. For this reason, in the conventional process, the resin merely surrounds the fiber bundle and voids occur at an interface therebetween, so that the wetting of the fiber tends to become insufficient. The combined use of the thermoplastic resin and the epoxy compound according to the present invention is very useful for solving the above-described problem and contributes to a remarkable improvement in the properties of the resultant reinforced resin.

In the present invention, any compound having at least one epoxy group per molecule, preferably at least two epoxy groups per molecule, may be used as the epoxy compound. The epoxy compound is particularly preferably a compound represented by the general formulae (1) or (2):

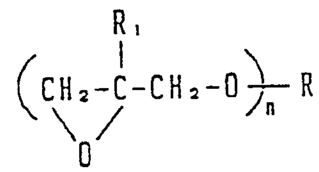

(1)

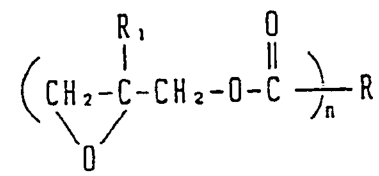

(2)

wherein $R_1$ is H or $CH_3$, R is an n-valent organic residue and n is an integer of 2 to 4.

Specific examples of the compound represented by the general formula (I) include ethylene glycol diglycidyl ether, polyethylene glycol diglycidyl ether, propylene glycol diglycidyl ether, polypropylene glycol diglycidyl ether, neopentyl glycol diglycidyl ether, 1,6-hexanediol diglycidyl ether, trimethylolpropane triglycidyl ether, bisphenol A diglycidyl ether, hydrogenated bisphenol A diglycidyl ether, and diglycidyl ether of bisphenol A-propylene oxide (2 mol) adduct.

Specific examples of the compound represented by the general formula (2) include diglycidyl terephthalate, diglycidyl isophthalate, diglycidyl isophthalate, triglycidyl trimellitate, diglycidyl 1,4-cyclohexanedicarboxylate, and diglycidyl adipate.

Further preferred examples of the epoxy compound used in the present invention include a copolymer of a glycidylic monomer such as glycidyl methacrylate or diglycidyl acrylate with an olefinic monomer such as ethylene, or a vinyl monomer such as vinyl acetate, for example, ethylene-glycidyl methacrylate copolymer, ethylene-glycidyl methacrylate-vinyl acetate copolymer and these copolymers modified by graft polymerization or the like.

It is also possible to use bisphenol A epoxy resin, novolac epoxy resin, epoxidized polybutadiene, etc.

The above-described epoxy compounds used in the present invention may be those substituted with a halogen atom such as chlorine or bromine.

In the present invention, it is also possible to use the above-described epoxy compound as a combination of two or more of them.

In the present invention, the amount of addition of the epoxy compound is 0.05 to 10 parts by weight based

on 100 parts by weight of the thermoplastic polyester resin. When the amount of the epoxy compound is below the above-described range, the impregnation of the resin into the fiber and the adhesion of the resin to the fiber become insufficient, so that no fiber-reinforced resin having a markedly improved strength can be obtained. On the other hand, when the amount of the epoxy compound is above the above-described range, the resin brings about gelation or an extreme increase in the melt viscosity, so that the processability is impaired or the resultant fiber reinforced thermoplastic polyester resin does not have necessary properties. The amount of the epoxy compound is 0.1 to 5 parts by weight based on 100 parts by weight of the thermoplastic polyester resin.

Any of homopolyesters and copolyesters prepared by the polycondensation of a dicarboxylic acid compound with a dihydroxy compound, that of a hydroxycarboxylic acid compound or that of a mixture of the above-described three components may be used as the thermoplastic polyester resin. They may be used alone or a combination of two or more of them. These thermoplastic polyesters may be those modified by known methods such as crosslinking, graft polymerization or the like. The thermoplastic polyester used in the present invention is preferably polyalkylene terephthalate, still preferably polyethylene terephthalate and polybutylene terephthalate, and a particularly significant effect can be attained through the use of these polyesters.

The reinforcing fiber impregnated with the thermoplastic polyester resin and the epoxy compound is passed through a shaping die to mold it into a desired shape, for example, a strand, a tape, a sheet or a special shape, thereby preparing a long fiber-reinforced polyester resin wherein the reinforcing fibers are substantially continuous over the entire length of the molded article in the longitudinal direction thereof and arranged substantially in parallel to each other. The resultant reinforced resin is taken up by means of a take-up roll 5 or the like. The reinforced resin thus taken up may be transferred as it is to the step of molding or the like. In general, however, it is preferred to cut it into pellets having a length of 3 to 50 mm for injection molding which is an easy molding method.

A great feature of the reinforced resin of the present invention thus prepared resides in a good adhesion between the long fiber and the resin. One of the simple methods of evaluating the adhesion between the long fiber and the resin comprises immersing one end of an article prepared by pultrusion, for example, a strand, in a colored solution and vertically standing the article to measure the rise of the colored solution in the reinforced resin. This method utilizes a capillary phenomenon of a gap observed when the adhesion is poor. Specifically, the adhesion may be measured by the following method. At the outset, about 1 % by weight of a water-soluble dye (eosin, methyl violet or the like) is dissolved in water. A small amount of the colored water thus prepared is put into a vessel. Then, a long fiber-reinforced resin, for example a strand, is cut to prepare a sample having a length of about 100 mm and one end of the sample is immersed by about 3 mm in the above-described colored solution. After the sample is allowed to stand upright for 10 min, it is taken out and the outer periphery is washed to determine the rise of the colored solution. The adhesion is preferably evaluated based on the average of the rise values on at least 10 colored solution samples. When the rise of the colored solution is very small, the sample may properly be cut into a shorter length.

The reinforced resin of the present invention exhibits the rise of a colored solution of 30 mm or less, preferably 20 mm or less as determined by the above-described method.

One of the indexes of the wettability or adhesion between the fiber and the resin is a critical fiber length, and when a glass fiber is used as the reinforcing fiber, the number-average critical fiber length is preferably at most a fiber diameter multiplied by 60. The term "critical fiber length" as used herein is intended to mean a value determined by a balance between the degree of adhesion of the fiber to the resin when the long fiber-reinforced resin is pulled and broken in the direction of orientation of the fiber, and the breaking stress. The shorter the critical fiber length, the more the improvement in the adhesion between the fiber and the resin.

Further, in the reinforced resin according to the present invention, it is also possible to use the thermoplastic polyester in combination with a small amount of at least one other thermoplastic resin as an auxiliary component so far as it does not significantly spoil the purpose and effect of the reinforced resin. Further, in order to impart desired properties according to the purpose of use of the reinforced resin, the reinforced resin of the present invention may contain known substances generally added to thermoplastic resins, e.g., stabilizers such as antioxidants, heat stabilizers and ultraviolet absorbers, antistatic agents, flame retardants, flame retardation assistants, colorants such as dyes and pigments, lubricants, plasticizers, crystallization accelerators and nucleating agents. Further, these substances may be used in combination with flaky and particulate inorganic compounds such as glass flake, mica, glass powder, glass beads, talc, clay, alumina, carbon black and wollastonite, and whiskers.

The reinforced resin of the present invention thus prepared is preferably injection-molded into an article wherein fibers are dispersed in a weight-average fiber length of 0.5 mm or more, thus giving a molded article having high mechanical strengths.

The long fiber-reinforced polyester resin prepared according to the present invention has excellent features that it not only has excellent mechanical properties such as high tensile strength, bending strength and impact

strength but also exhibits remarkable improvements in the problems such as fuzzing of fibers on the surface of the resultant molded article and the separation and scattering of fibers during the taking-up of the reinforced resin as a strand and the cutting of the strand by virtue of a remarkable improvement in the impregnation of the resin component into the fiber and the adhesion between the resin and the fiber, which renders the present invention very useful from the industrial viewpoint.

[Examples]

The present invention will now be described in more detail by way of the following Examples, though it is not limited to these only.

Examples 1 and 2 and Comparative Example 1

Use was made of an apparatus schematically shown in Fig. 1, and a roving of a glass fiber (fiber diameter: 16.7 μm) was pulled through a crosshead, impregnated with a molten mixture of a polyethylene terephthalate with an epoxy compound (molten resin temperature: 275 °C) listed in Table 1 supplied from an extruder connected to the crosshead while pulling the glass fiber through the crosshead, passed through a shaping die (outlet die of the crosshead), taken up as a strand, and cut to give pellets of a molded article having a length of 12 mm.

For comparison, pellets of a molded article were prepared in the same manner as that of the above-described Example, except that the impregnation was conducted by making use of polyethylene terephthalate without addition of any epoxy compound.

In any case, the fuzzing of the strand and the amount of the fibers separated and scattered from the pellets of the molded article were observed with the naked eye. Further, test pieces were prepared from these molded articles by injection molding, and the properties thereof were evaluated by the following measuring methods. The results are given in Table 1.

| | |
|---|---|
| Tensile strength: | according to ASTM D-638 |
| Bending strength: | according to ASTM D-790 |
| Modulus in bending: | according to ASTM D-790 |
| Impact strength: | notched Izod impact strength according to ASTM D-256 (thickness of test piece: 6.3 mm) |

In Examples 1 and 2 and Comparative Example 1, ten samples were prepared by cutting the strand into a length of about 10 cm, and the rise of the colored solution (average of values obtained on ten samples) was measured in the same manner as that described above.

Further, several strands cut into a suitable length were arranged and subjected to melt compression molding to prepare a dumbell test piece, which was broken under tension and the number-average length ($\bar{\ell}$) of fibers in the resin was measured to calculate the-number-average critical fiber length ($\ell c$) by the following equation:

$$\ell c = \frac{4}{3} \bar{\ell}$$

Examples 3 and 4 and Comparative Example 2

Pellets of the molded articles were prepared, injection-molded and evaluated in the same manner as that of Examples 1 and 2 and Comparative Example 1, except that polybutylene terephthalate was used as the thermoplastic polyester and the kind of the epoxy compound was varied. The temperature of the molten resin for impregnation was 265 °C.

The results are given in Table 2.

Table 1

| | Ex.1 | Ex.2 | Comp. Ex. 1 |
|---|---|---|---|
| Compsn. | mixture of polyethylene terephthalate (100 pts. wt.) with epoxy compd. *1 (2 pts.wt.) 60 wt.% | mixture of polyethylene terephthalate (100 pts. wt.) with epoxy compd. *2 (2 pts.wt.) 60 wt.% | polyethylene terephthalate 60 wt.% |
| | glass fiber 40 wt.% | glass fiber 40 wt.% | glass fiber 40 wt.% |
| Fuzzing of strand | little | little | much |
| Separation and scattering of fiber | little | little | much |
| Rise of colored solution (mm) | 7 | 12 | 70 |
| Critical fiber length (μm) | 750 | 810 | 1150 |
| Tensile strength ($kg/cm^2$) | 1920 | 1870 | 1650 |
| Bending strength ($kg/cm^2$) | 2300 | 2300 | 2280 |
| Modulus in bending ($kg/cm^2$) | 138000 | 138000 | 138000 |
| Impact strength (kg·cm/cm) | 32 | 29 | 22 |

Note: *1) hydrogenated bisphenol A diglycidyl ether

*2) polyethylene glycol diglycidyl ether

Table 2

| | Ex. 3 | Ex. 4 | Comp. Ex. 2 |
|---|---|---|---|
| Compsn. | mixture of polybutylene terephthalate (100 pts. wt.) with epoxy compd. *3 (2 pts.wt.) 60 wt.% | mixture of polybutylene terephthalate (100 pts. wt.) with epoxy compd. *4 (2 pts.wt.) 60 wt.% | polybutylene terephthalate 60 wt.% |
| | glass fiber 40 wt.% | glass fiber 40 wt.% | glass fiber 40 wt.% |
| Fuzzing of strand | little | little | much |
| Separation and scattering of fiber | little | little | much |
| Rise of colored solution (mm) | 5 | 9 | 45 |
| Critical fiber length (μm) | 680 | 750 | 1080 |
| Tensile strength ($kg/cm^2$) | 1800 | 1760 | 1530 |
| Bending strength ($kg/cm^2$) | 2290 | 2290 | 2200 |
| Modulus in bending ($kg/cm^2$) | 123000 | 123000 | 122000 |
| Impact strength (kg·cm/cm | 31 | 30 | 25 |

Note: *3) bisphenol A diglycidyl ether

*4) glycerin diglycidyl ether

## Claims

1. A process for preparing a long fiber-reinforced thermoplastic polyester resin comprising a reinforcing fiber bundle and a polyester resin sufficiently impregnated into and bonded to said fiber bundle, which comprises impregnating a molten thermoplastic polyester resin into a continuous reinforcing fiber bundle while pulling said fiber bundle to prepare a long fiber-reinforced polyester resin containing 5 to 80 % by weight, based on the whole, of reinforcing fibers arranged substantially in parallel to each other, characterized in that 0.05 to 10 parts by weight of an epoxy compound is used in combination with 100 parts by weight of the thermoplastic polyester resin and that either the epoxy compound is adhered to the reinforcing fiber bundle before being impregnated with the molten thermoplastic polyester resin, or the reinforcing fiber bundle is impregnated with a molten resin comprising a blend of the thermoplastic polyester resin with the epoxy compound.

2. A process for preparing a long fiber-reinforced thermoplastic polyester resin according to claim 1, wherein the impregnation of the molten thermoplastic polyester resin is conducted through the use of a crosshead while pulling the reinforcing fiber bundle.

3. A molded article in the form of strand, pellet, tape or sheet comprising a long fiber-reinforced thermoplastic polyester resin, characterized in that said long fiber-reinforced thermoplastic polyester resin is prepared by a process according to claim 1 or 2 and the reinforcing fibers are substantially continuous over the entire length in the longitudinal direction of the molded article and arranged substantially in parallel to each other.

4. A molded article made by injection-molding pellets of the long fiber-reinforced thermoplastic polyester resin according to claim 3, wherein the reinforcing fiber dispersed therein has a weight-average fiber length of 0.5 mm or more.

Fig. 1